# FASCICULE DE BREVET EUROPEEN

(11) **EP 4 433 313 B1**
(45) Date de publication et mention de la délivrance du brevet: **13.08.2025**
(21) Numéro de dépôt: 22817695.4
(22) Date de dépôt: 14.11.2022
(51) Int. Cl.: B60C 15/04

(54) **PNEUMATIQUE COMPORTANT UNE PAIRE DE TRINGLES SOUPLES**
REIFEN MIT EINEM PAAR FLEXIBLER WULSTKERNE
TYRE COMPRISING A PAIR OF FLEXIBLE BEAD CORES

(30) Priorité: 19.11.2021 FR 2112236
(43) Date de publication de la demande: 25.09.2024
(73) Titulaire: COMPAGNIE GENERALE DES ETABLISSEMENTS MICHELIN, 63000 Clermont-Ferrand (FR)
(72) Inventeur: REYNAL DE ST-MICHEL, Remi, 63040 CLERMONT-FERRAND CEDEX 09 (FR); AHOUANTO, Michel, 63040 CLERMONT-FERRAND CEDEX 09 (FR); MORIVAL, Sylvain, 63040 CLERMONT-FERRAND CEDEX 09 (FR); REIX, Olivier, 63040 CLERMONT-FERRAND CEDEX 09 (FR); CLERGEAT, Jean-mathieu, 63040 CLERMONT-FERRAND CEDEX 09 (FR)
(74) Mandataire: M.F.P. Michelin
(86) Numéro de dépôt international: PCT/EP2022/081834
(87) Numéro de publication internationale: WO 2023/088848

(56) Documents cités:
- WO-A1-2013/182597
- JP-A- 2001 301 430
- JP-A- 2010 173 437
- JP-A- H0 478 703
- JP-A- H0 524 418
- JP-A- H04 266 506

## Description

### Domaine de l'invention

La présente invention concerne un pneumatique pour véhicule automobile comprenant une paire de tringles souples, et de masses allégées. L'invention s'applique à tout type de pneumatiques pour tout type de véhicules.

### Définitions

Par convention, on considère un repère (O, OX, OY, OZ), dont le centre O coïncide avec le centre du pneumatique, les directions circonférentielle OX, axiale OY, et radiale OZ désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

La constitution du pneumatique est usuellement décrite par une représentation de ses constituants dans un plan méridien, c'est-à-dire un plan contenant l'axe de rotation du pneumatique. On parlera de section méridienne qui correspond à une coupe du pneumatique dans un plan méridien.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts parallèles entre eux et enrobés par un matériau polymérique de type élastomère ou mélange élastomérique. L'ensemble constitué par l'armature de sommet et la bande de roulement est appelé sommet.

L'armature de carcasse d'un pneumatique radial comprend habituellement au moins une couche de carcasse constituée d'éléments de renforcement métalliques ou textiles enrobés dans un mélange élastomérique d'enrobage. Les éléments de renforcement sont sensiblement parallèles entre eux et font, avec la direction circonférentielle, un angle compris entre 85° et 95°. La couche de carcasse comprend une partie principale, reliant les deux bourrelets entre eux et s'enroulant, dans chaque bourrelet, autour d'une structure annulaire de renforcement.

La structure annulaire de renforcement considérée ici, est une tringle qui dans l'état de l'art actuel comprend un élément de renforcement circonférentiel entouré d'au moins un matériau, de manière non exhaustive, métallique, élastomérique ou textile. L'enroulement de la couche de carcasse autour de la tringle va de l'intérieur vers l'extérieur du pneumatique pour former un retournement, comprenant une extrémité. Le retournement, dans chaque bourrelet, permet l'ancrage de la couche d'armature de carcasse à la tringle.

La tringle encastrée dans le bourrelet contribue à une pluralité de fonctions du pneumatique.

En tout premier lieu, la tringle contribue à l'étanchéité, notamment des pneumatiques tubeless en empêchant la fuite du gaz interne de gonflage vers l'extérieur. La tringle frette une couche de matériau élastomérique en contact avec la jante, avec un serrage qui augmente avec la pression de gonflage. Cette étanchéité est réalisée sur une partie siège, sensiblement axial, et sur une autre partie crochet de la jante, sensiblement radial. Une pression de serrage sur le siège de jante d'environ 1.4 MPa est attendue et 2.5 MPa sur le crochet de jante.

En outre, le serrage sur le siège et sur le crochet de jante doit être suffisant pour éviter le décoincement du pneumatique lors de la prise de virage sévère.

**Par** ailleurs, la qualité du serrage du pneumatique sur la jante intervient également lors de la transmission des couples moteurs et/ou freineurs du véhicule. Un serrage élevé du bourrelet sur la jante est attendu pour éviter la rotation des bourrelets sur la jante, et pour transmettre efficacement les couples moteurs/freineurs.

Enfin, la tringle contribue au comportement du véhicule. Les changements de direction sont initiés par un angle de braquage au volant qui se transmet aux roues de l'essieu directeur, puis aux pneumatiques de ce même essieu grâce à la liaison des bourrelets avec la jante.

Toute la puissance du véhicule est transmise aux roues de l'essieu moteur puis aux pneumatiques équipant ce même essieu par la liaison des bourrelets avec la jante et enfin aux quatre aires de contact résultant de l'écrasement des pneumatiques par la charge du véhicule sur un sol de roulage. La qualité du comportement du véhicule est donc déterminée par ces deux zones de contacts à savoir le contact des pneumatiques avec la jante puis le contact des pneumatiques avec le sol de roulage.

Le plus souvent dans cette présente demande de brevet, le pneumatique apparaît monté sur une jante. Ladite jante est choisie selon les spécifications de la norme l'ETRTO (Organisation Européenne Technique des Pneumatiques et des jantes) qui, à une dimension pneumatique donnée, associe des jantes recommandées. En générale, plusieurs largeurs jantes peuvent convenir à une même dimension pneumatique. La partie de la jante qui interagit avec le pneumatique dans le cadre de l'invention est axisymétrique par rapport à l'axe de rotation du pneumatique. Pour décrire la jante, il suffit de décrire le profil générateur dans un plan méridien.

Dans un plan méridien, la jante comprend au moins un crochet situé à une extrémité axiale, et relié à un siège qui est destiné à recevoir une face du bourrelet située le plus radialement intérieurement. Entre le siège et le crochet, prend place une portion rectiligne qui relie le crochet de jante au siège par des congés de raccords. Le crochet de la jante prolongée par la portion rectiligne limite axialement le déplacement des bourrelets lors du gonflage.

La montabilité des bourrelets sur une jante lors du gonflage est aussi une performance qui peut être impactée par l'invention. La performance montabilité des bourrelets consiste à évaluer l'aptitude des bourrelets d'un pneumatique à s'installer correctement sur une jante lors de du gonflage. Des moyens d'observation, notamment radiographiques, des bourrelets montés sur une jante permettent de diagnostiquer la qualité du montage.

Il est donc possible de classer deux pneumatiques par rapport à leur performance de montabilité sur jante.

### Technique antérieure

Le plus souvent, selon l'état de l'art, une tringle est constituée de métal avec une âme en acier entourée de câbles métalliques. L'âme est constituée d'un mono-filament en acier qui est cintré sur lui-même et ses deux extrémités sont soudées afin de former un anneau sensiblement circulaire. Il s'ensuit que la masse des deux tringles métalliques contribue de façon significative à la masse totale du pneumatique.

D'autres matériaux que l'acier ont déjà été utilisés pour former des tringles. Dans l'état de l'art on peut trouver des tringles comportant des câbles en textiles, le plus souvent, en aramide, en nylon, ou en polyester. Ces câbles textiles peuvent être utilisés seuls ou en combinaison avec d'autres matériaux de renforts.

Le textile est utilisé comme renfort depuis les origines du pneumatique. Les câbles textiles, fabriqués à partir de fibres textiles continues telles que des fibres en polyester, en polyamides (nylon et/ou aramide), ou en cellulose, jouent un rôle important dans les pneumatiques, y compris dans les pneus haute performance homologués pour rouler à très haute vitesse. Pour répondre aux exigences des pneus, ils doivent présenter une forte résistance à la rupture, un module élastique d'extension élevé, une bonne endurance en fatigue et enfin une bonne adhésion aux matrices de caoutchouc ou autres polymères qu'ils sont susceptibles de renforcer.

On rappellera simplement ici que ces retors ou câbles textiles, traditionnellement à double torsion (T1, T2), sont préparés par un procédé dit de retordage (« twisting ») dans lequel :
- au cours d'une première étape, le surtordage, chaque filé ou fibre multifilamentaire (en anglais « yarn ») constitutive du câblé final est tout d'abord individuellement tordue sur elle-même (selon une torsion initiale Ti) dans une direction donnée Dl (respectivement sens S ou Z), pour former un brin (en anglais « strand ») dans lequel les filaments élémentaires se voient imposés une déformation en hélice autour de l'axe de fibre (ou axe du brin) ;
- puis, au cours d'une seconde étape, le retordage, plusieurs brins, généralement au nombre de deux, trois ou quatre, de natures identiques ou différentes dans le cas de câblés dits hybrides ou composites, sont ensuite retordus ensemble selon une torsion finale T2 (pouvant être égale à ou différente de Ti) en direction opposée D2 (respectivement sens Z ou S, selon une nomenclature reconnue désignant l'orientation des spires selon la barre transversale d'un S ou d'un Z), pour l'obtention du câblé (en anglais « cord ») ou assemblage final à plusieurs brins.

Le rôle du retordage est d'adapter les propriétés du matériau afin de créer la cohésion transversale du renfort, d'accroître sa tenue en fatigue et aussi d'améliorer l'adhésion avec la matrice renforcée.

**De** tels câbles textiles, leurs constructions et procédés de fabrication sont bien connus de l'homme du métier. Ils ont été décrits en détail dans un grand nombre de documents, pour ne citer que quelques exemples dans les documents brevet EP021 485, EP220 642, EP225 391, EP335 588, EP467 585, US3 419 060, US3 977 172, US4 155 394, US5 558.

Le document DE19706262A1 divulgue un pneumatique avec des tringles formées de câbles textiles, et plus précisément des câbles en aramide, enroulés dans les directions radiales et axiales. Ce document explique l'amélioration de la pression d'éclatement obtenue avec ce type de tringles, mais sans précisions sur les autres fonctions auxquelles contribuent les tringles.

Le document FR2741566B3 propose également une tringle pour pneumatiques de véhicules avec plusieurs couches de fibres synthétiques, de préférence de fibres d'aramide, qui sont enroulées en juxtaposition et/ou en superposition, les couches ou fibres étant enduites d'un agent de liaison au moyen duquel les couches et/ou fibres sont fixées les unes aux autres. L'objectif visé est une stabilité de forme de la tringle de manière à pouvoir être utilisée dans les étapes ultérieures de fabrication du pneumatique sans perdre sa forme prédéfinie. Les difficultés de mise en œuvre de cette solution rendent les coûts prohibitifs.

Les documents JPH0478703A, JP2001301430A, WO2013/182597Al, JP2010 173437A, JPH0524418A et JPH04266506A divulguent des pneumatiques ou des matériaux composites connus de l'état de la technique.

**Il** existe encore un besoin d'optimiser la conception des tringles des pneumatiques sans dégrader la pluralité des fonctions auxquelles elles contribuent.

Les inventeurs se sont donnés comme objectif de concevoir un pneumatique doté d'une paire de tringles de masse allégée tout en assumant la pluralité des fonctions attendues des tringles. Les inventeurs se sont également intéressés à concevoir des tringles dont le coût de revient industriel reste maîtrisé par rapport à l'état de l'art.

### Exposé de l'invention

Ce but a été atteint par un pneumatique pour véhicule automobile comprenant dans un plan méridien :
deux bourrelets destinés à être montés sur une jante, deux couches de flancs reliés aux bourrelets, un sommet comportant une bande de roulement, le sommet ayant un premier côté relié à l'extrémité radialement extérieure de l'un des deux couches de flancs et ayant un deuxième côté relié à l'extrémité radialement extérieure de l'autre des deux couches de flancs;
au moins une armature de carcasse s'étendant depuis les deux bourrelets jusqu'au sommet, l'armature de carcasse comportant une pluralité d'éléments de renforcement de carcasse et étant ancrée dans les deux bourrelets par un retournement autour d'une tringle, de manière à former dans chaque bourrelet une partie principale et un retournement;
dans chaque bourrelet, la tringle ayant la forme d'un anneau circonférentiel fermé, frettant le bourrelet du pneumatique sur la jante et comprenant une première partie constituée d'un premier matériau M1 se présentant sous la forme de câbles textiles, ladite première partie coopérant avec une deuxième partie de la tringle constituée d'un deuxième matériau M2 de renfort ;
La raideur en extension de la tringle est comprise entre 4.5x10⁵ N/m et 1.8 x10⁶ N/m ;
La rigidité de flexion circonférentielle de la tringle, est supérieure ou égale à Kr * (1000*D/(16*25.4))³ , où D est le diamètre de la roue de montage du pneumatique mesuré au siège de la jante en mètre, et où Kr est égal à 2.10⁻² N.m² ;
l'allongement élastique de la tringle est supérieur ou égal à 2%.

La raideur est la grandeur mécanique qui indique la résistance à la déformation élastique d'un corps (par exemple un ressort). Plus une pièce est raide, et plus il faut lui appliquer un effort important pour obtenir une déflexion donnée. On appelle raideur en extension de la tringle, le rapport d'un effort appliqué dans la direction circonférentielle divisé par le déplacement obtenu.

**Ici,** on définit la rigidité de flexion circonférentielle de la tringle comme étant le produit du module élastique (module de Young) par le moment quadratique d'une section méridienne de la tringle dans la direction circonférentielle. Dans le système international d'unités, la rigidité de flexion circonférentielle s'exprime en Newtons mètres carrés. Cette grandeur peut être mesurée par exemple selon la norme ISO 178.

Le principe de l'invention est de décomposer une tringle en blocs fonctionnels cohérents par rapport aux sollicitations auxquelles elle est soumise.

Une tringle subit à la fois des sollicitations d'extension et flexion circonférentielles. En effet lors de la phase du montage du pneumatique sur une jante, la tringle doit être suffisamment souple pour s'allonger sans rupture pour franchir le crochet de jante. Par ailleurs, pendant le gonflage du pneumatique, la tringle doit développer des efforts circonférentiels prononcés pour fretter le bourrelet sur la jante à un niveau suffisant. Une pression de serrage autour de 14 bars est attendue sur le siège de la jante pour un pneumatique tourisme.

D'après les inventeurs, le montage du pneumatique sur la jante d'usage entraine très souvent de fortes flexions dans la zone basse. Celles-ci se produisent lorsque la tringle doit passer le crochet de jante, car son développement plus court oblige à lui appliquer une force locale (avec un levier, un galet). A cet endroit on relève souvent une forte courbure ; le matériau rigide en compression doit avoir un module d'élasticité en compression en deçà d'un certain seuil pour que la tringle puisse être montée sans se casser.

Cette approche fonctionnelle conduit à une solution de tringle qui comprend des câbles textiles qui apportent la rigidité en extension nécessaire, et lesdits câbles textiles coopèrent avec un deuxième matériau doté d'un haut module d'élasticité en compression. Ce deuxième matériau contribue à doter la tringle d'un niveau de rigidité de flexion circonférentielle appropriée grâce à son module élastique de compression. On entend par haut module élastique en compression, une valeur comprise entre 1 GPa 10 GPa.

Les câbles textiles coopèrent avec le deuxième matériau M2 signifie que ledit matériau M2 peut venir, par exemple, gainer les câbles textiles en s'enroulant autour. Un autre exemple correspond au cas où le deuxième matériau constitue une âme de la tringle, et que les câbles textiles viennent s'enrouler autour de cette âme dans la direction circonférentielle.

Pour quantifier la rigidité de flexion circonférentielle nécessaire à un bon fonctionnement de la tringle, les inventeurs ont analysé les différentes étapes de la fabrication de l'ébauche du pneumatique avant la phase cuisson dans un moule prévu à cet effet.

Lors de la fabrication, la tringle subit plusieurs manipulations pendant la réalisation de l'ébauche du pneumatique avant la phase de cuisson. On a donc besoin de la maintenir sous sa forme toroïdale sans un effondrement sous son propre poids, ou sous le poids de la carcasse. La rigidité de flexion circonférentielle à un niveau approprié permet de garder la forme initiale de la tringle textile. Les inventeurs ont identifié la rigidité de flexion circonférentielle Kr nécessaire à la tringle pour éviter qu'elle ne s'effondre sur son poids ou sur celui de la carcasse pour un pneu de 16 pouces de diamètre jante. Cette rigidité de flexion circonférentielle prend la valeur Kr égale à 2.10⁻² N.m².

Les inventeurs ont étudié les paramètres de fabrication pour établir la relation entre la rigidité de flexion circonférentielle de la tringle du pneumatique étudié en comparaison avec une tringle de l'état de l'art métallique.

D'après les inventeurs la rigidité de flexion circonférentielle de la tringle doit être supérieure à Kr * (1000*D/(16*25.4))³, où D est le diamètre de la roue de montage du pneumatique mesuré au siège de la jante en millimètres. Ainsi, la rigidité de flexion circonférentielle est paramétrée par la dimension pneumatique étudiée. Cette condition constitue la deuxième caractéristique principale de l'invention.

La première caractéristique principale de l'invention, relative à la raideur de la tringle dans la direction circonférentielle, est liée au choix du matériau M1.

Le choix du matériau M1 s'est porté sur des câbles textiles choisis dans la famille aramide, et/ou nylon, et/ou polyester. A titre d'illustration, un câble en aramide composé de deux brins de 167 tex, retordus à une torsion de 315 tours par mètre convient pour l'invention. La force de rupture d'un tel câble est de 60 daN, avec un allongement à rupture de 5%. Son module élastique d'extension est supérieur à 30 GPa.

Le choix de câbles textiles conduit à une tringle ayant une raideur en extension comprise entre 4.5x10⁵ N/m et 1.8 x10⁶ N/m, pour la gamme de pneumatiques considérée ici.

La troisième caractéristique principale de l'invention est liée à l'aptitude de la tringle à s'allonger sans rupture sous une sollicitation élastique.

En effet, le diamètre radial du point situé à l'extrémité radiale du bourrelet d'un pneumatique de l'invention est inférieur au diamètre de la jante mesuré au siège. Cette différence de diamètre est à l'origine d'un serrage géométrique de la tringle sur la couche de gomme située entre la tringle et la jante. Ce serrage est utile pour maintenir le pneumatique en position sur la jante lors de l'occurrence d'une baisse de la pression de gonflage de manière à éviter le déjantage du pneumatique. La tringle de l'invention grâce à son grand allongement élastique supérieur ou égal à 2% peut absorber cette sollicitation sans rupture.

Les principales caractéristiques de l'invention à savoir la raideur d'extension de la tringle textile comprise entre 4.5x10⁵ N/m et 1.8 x10⁶ N/m, sa rigidité de flexion circonférentielle supérieure à Kr * (1000*D / (16*25.4))³, et son allongement élastique supérieur ou égal à 2% combinés conduisent au pneumatique de l'invention, c'est à dire un pneumatique de masse allégée par rapport à l'état de l'art et susceptible de remplir toutes les fonctions attendues de la tringle. D'autres caractéristiques secondaires en lien avec les choix des matériaux M1 et M2, ou encore différents modes de réalisation sont présentés ci-dessous.

Avantageusement, le module élastique d'extension du premier matériau M1 est compris entre 10 GPa et 120 GPa.

Un module élastique d'extension inférieur à 10 GPa, nécessiterait une trop large section méridienne de la tringle générant des difficultés par rapport à la masse, et aux surépaisseurs. Un module élastique d'extension au-delà de 120 GPa, inversement conduirait à une section trop étroite et conduirait à des contraintes susceptibles de casser la tringle.

Préférentiellement, le module élastique en compression du deuxième matériau M2 est compris entre 1 et 10 GPa.

Selon les inventeurs pour atteindre la valeur de rigidité de flexion circonférentielle cible, Kr * (1000*D/(16*25.4))³, le module élastique en compression doit être compris entre 1GPa et 10 GPa.

Selon un mode de réalisation de l'invention, la deuxième partie de la tringle constituée du matériau M2 est enroulée autour du premier matériau M1 de la première partie de la tringle, de manière à constituer un gainage du premier matériau M1, la tringle est obtenue par un empilement de couches du câble ainsi gainé.

Selon ce mode de réalisation, la tringle est obtenue par la répétition d'un élément de base constitué d'un câble textile enrobé d'un deuxième matériau élastomérique qui confère à l'ensemble sa rigidité de flexion circonférentielle. Cet élément de base est donc un câble textile gainé. Le matériau d'enrobage peut être choisi dans la famille des polyamides tel que par exemple le nylon. Cet élastomère a un module élastique en compression inférieur à 10 GPa.

Un procédé de trancannage est utilisé pour fabriquer la tringle à partir du câble gainé. La tringle est obtenue par l'enroulement d'une spire autour d'un support tout en se déplaçant latéralement d'une distance égale au diamètre du câble gainé. A la fin du processus, la tringle résulte de l'assemblage des plusieurs couches de câbles gainés qui se collent les uns aux autres conférant sa rigidité à la tringle. La section de l'assemblage dans un plan méridien peut par exemple prendre la forme d'un hexagone, ou de tout autre forme polygonale, ou circulaire.

Une variante de ce mode de réalisation se rencontre quand les câbles sont remplacés par des filaments d'un textile noyés dans le mélange d'enrobage.

Selon un autre mode de réalisation de l'invention, la deuxième partie de la tringle constituée du matériau M2 est une âme interne, et la première partie de la tringle est constituée du matériau M1, sous la forme de câbles textiles, est enroulée autour de ladite âme interne.

L'âme interne peut être constituée d'un polymère polylactique (en anglais : PLA, Poly Lactic Acid). Le PLA a un module de Young compris entre 3 et 3,5 GPa, une résistance à la traction comprise entre 50 et 70 MPa, un allongement à la rupture variant de 2 à 10 %, et un module de flexion de 4 à 5 GPa.

Un des avantages du PLA est qu'elle est une alternative naturelle bio sourcée au matériaux classiques issus du pétrole.

En effet, le PLA peut être obtenu à partir d'amidon de maïs. C'est un produit résultant de la fermentation des sucres ou de l'amidon sous l'effet de bactéries synthétisant l'acide lactique. Dans un second temps, l'acide lactique est polymérisé par un procédé de fermentation, pour devenir de l'acide polylactique.

Un autre choix possible pour le deuxième matériau M2 est le polyamide (Nylon) 66. Il est composé de deux monomères qui contiennent chacun 6 atomes de carbone, l'hexaméthylènediamine et l'acide adipique, qui donnent son nom au nylon 66. Le nylon 66 est utilisé lorsqu'une résistance mécanique élevée, une rigidité, une bonne stabilité à la chaleur et/ou une résistance chimique sont requises, comme c'est le cas ici. Son module élastique d'extension est de 3.5 GPa, et son module élastique en compression est de 2.7 GPa. Son élongation à la rupture est de 70%.

Avantageusement, la géométrie de l'âme interne dans une section méridienne de la tringle est de forme cruciforme avec une croix comportant 3 à 6 branches, ou de la forme d'un "L", ou de la forme en "U", ou en de la forme d'un "H", ou de la forme d'un cercle ou de la forme d'un polygone d'au moins 3 côtés.

Les formes de la section méridienne de la tringle en "L" et "U" permettent de contenir les câbles textiles apportant la rigidité d'extension circonférentielle.

Dans le cas d'une âme interne de section cruciforme ou en "H", l'espace entre chaque bras détermine un volume qui sera rempli par les fils textiles. Pour éviter de devoir passer au-dessus de chaque bras, il faut que le collage se fasse avec une rotation de 1/Nb tours sur les sections en vis-à-vis. Nb étant le nombre de branche de la croix. De cette manière, lors du bobinage un même fil remplira naturellement tous les espaces entre les bras de la croix, sans besoin d'interrompre le process.

Avantageusement, le deuxième matériau M2 de l'âme interne de la tringle est du type thermo durci, de préférence réticulée et plus particulièrement du type vinylester.

Préférentiellement, le câble textile est obtenu par un retordage de torsion T2 de N brins d'un matériau textile dans une direction donnée D1 (respectivement sens S ou Z), avec N≥1, chaque brin résultant d'un surtordage d'une torsion T1 d'un filé dudit matériau textile, dans une direction opposée D2 (respectivement Z ou S).

Avantageusement, les filés sont constitués d'un assemblage hybride de filaments de matériaux textiles tels que le nylon, le PET, et l'aramide.

Préférentiellement, les filés sont constitués d'un assemblage de filaments d'aramide ; préférentiellement encore le nombre N de brins pour le retordage est compris entre 2 et 6, et encore plus préférentiellement N = 2.

Préférentiellement la torsion de surtordage T1, et la torsion de retordage T2 sont identiques, et inférieures à 500 tours par mètre, préférentiellement T1, et T2 sont identiques et inférieures à 440 tours par mètre, et encore plus préférentiellement T1 et T2 sont identiques et inférieures ou égales à 315 tours par mètre.

Avantageusement, la couche externe autour de l'âme interne de la tringle est constituée d'un nombre de câbles en aramide de 15 à 70.

Avantageusement, le bourrelet du pneumatique comprenant une couche de flancs et une couche de protection, lesdites couches de flancs et de protection sont constituées du même matériau élastomérique.

Avantageusement encore, la couche de bourrage est constituée d'un matériau composite comprenant des filaments textiles associés à une matrice élastomérique.

### Brève description des dessins

D'autres détails et caractéristiques avantageux de l'invention ressortiront ci-après de la description des exemples de réalisation de l'invention en référence aux figures qui représentent des vues schématiques d'un pneumatique, et des tringles selon des modes de réalisation de l'invention. Les figures ne sont pas représentées à l'échelle pour en simplifier la compréhension.

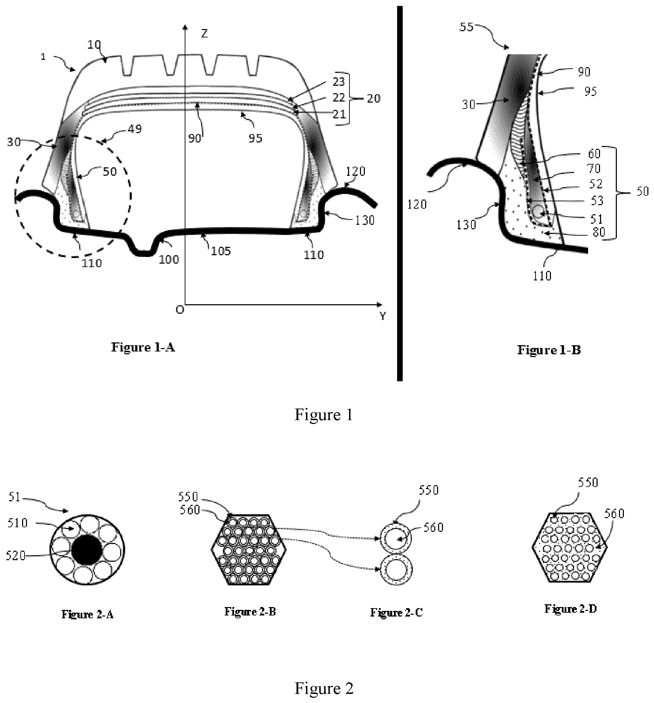

La figure 1 comprend une vue 1-A qui montre une section d'un pneumatique de l'invention dans un plan méridien, et une vue 1-B qui représente un grossissement d'une portion de la vue méridienne 1-A entourée d'un cercle en tirets montrant un grossissement de la zone du bourrelet contenant une tringle d'un pneumatique de l'invention.
La figure 2-A est une tringle métallique de l'état de l'art. Les figures 2-B, 2-C, et 2-D montrent des modes de réalisation de l'invention avec des vues de sections de la tringle dans un plan méridien. Dans ces modes de réalisation, un élément de base en forme d'anneau est constitué du premier matériau de la première partie de la tringle, c'est-à-dire un câble textile qui occupe l'espace intérieure. Le deuxième matériau occupe l'espace périphérique, de manière à constituer une gaine autour du matériau câble textile.

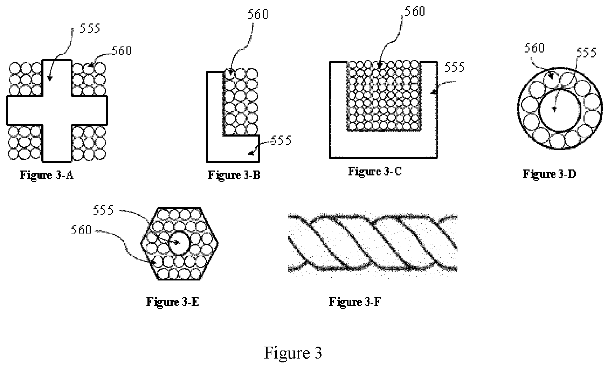

Les figures 3-A, 3-B, 3-C, 3-F représentent d'autres modes de réalisation de l'invention, montrant des câbles textiles associés à un matériau homogène rigide de forme géométrique variable constituant une âme interne autour de laquelle s'enroulent les câbles textiles.

### Description détaillée de l'invention

L'invention a été mise en œuvre sur un pneumatique tourisme de dimension 245/45R18, selon la norme de spécifications de l'ETRTO (Organisation Technique Européenne des jantes et Pneumatiques). Un tel pneumatique peut porter une charge de 800 kilos, gonflé à une pression de 250 kPa.

Sur la figure 1-A, le pneumatique de référence générale 1 comprend une armature de carcasse 90 constituée de renforts enrobés de composition caoutchouteuse, et deux bourrelets 50 en contact avec une jante 100. Une zone 49 délimitée par un cercle en pointillé définie une zone basse du pneumatique dont un grossissement est proposé sur la figure 1-B. L'armature de carcasse 90 est ancrée dans chacun des bourrelets 50. Le pneumatique comporte en outre une armature de sommet 20 comprenant deux couches de travail 21, 22, et une couche de frettage 23. Chacune des couches de travail 21 et 22 est renforcée par des éléments de renforcement filaires qui sont parallèles dans chaque couche et croisés d'une couche à l'autre, en faisant avec la direction circonférentielle des angles compris entre 10° et 70°. La couche de frettage 23, disposée radialement à l'extérieur de l'armature de sommet 20, cette couche de frettage 23 étant formée d'éléments de renforcement orientés circonférentiellement et enroulés en spirale. Une bande de roulement 10 est posée radialement extérieurement sur la couche de frettage 23 ; c'est cette bande de roulement 10 qui assure le contact du pneumatique 1 avec un sol. Le pneumatique 1 représenté est un pneu « tubeless » : il comprend une « gomme intérieure » 95 en composition caoutchouteuse imperméable au gaz de gonflage, recouvrant la surface intérieure du pneumatique.

La partie de la jante 100 qui interagit avec le pneumatique dans le cadre de l'invention est axisymétrique par rapport à l'axe de rotation du pneumatique.

Dans un plan méridien, la jante 100 comprend au moins un crochet 120 situé à une extrémité axiale, et relié à un siège 110 qui est destiné à recevoir une face du bourrelet située le plus radialement intérieurement. Entre le siège 110 et le crochet 120, prend place une portion rectiligne 130 qui relie le crochet de jante 120 au siège 110 par des congés de raccords. Le crochet de la jante 120 prolongée par la portion rectiligne 130 limite axialement le déplacement des bourrelets lors du gonflage.

Sur la figure 1-B, on montre une zone basse de référence générale 55 contenant la couche de flanc 30 et le bourrelet 50. Le contour de la zone basse reprend les contours externes de la couche de flanc 30 au moins en partie et le contour externe du bourrelet 50.

Ledit bourrelet 50 comprend en partie une armature de carcasse 90 qui comporte une partie principale 52, puis s'enroule autour d'une tringle 51 pour former un retournement 53. Une couche de bourrage 70 est positionnée entre la partie principale 52 de l'armature de carcasse 90 et de son retournement 53. Selon les modes de réalisation, le bourrelet 50 peut comprendre une couche latérale de renforcement 60, positionnée axialement extérieurement au retournement 53, et axialement intérieurement à la couche de flancs 30. Axialement le plus intérieurement au bourrelet 50, une couche étanche 95 constitue la paroi intérieure en contact avec l'air interne de gonflage.

Ledit bourrelet 50 comprend également une couche de protection 80 qui est en contact axialement extérieurement avec une portion rectiligne 130 de la jante de façon à limiter le déplacement axial du bourrelet. Ladite couche de protection 80 comprend aussi une portion destinée à être en contact avec la jante au niveau du siège de jante 110. Une couche de flanc 30 coopère avec le bourrelet 50 et constitue une paroi latérale extérieure.

Sur la figure 2-A, on a représenté une section méridienne d'une tringle 51 de l'état de l'art constituée d'une âme interne centrale 520 en acier, entourée de câbles métalliques 510.

Sur la figure 2-B, il est représenté une tringle de l'invention de section hexagonale. Les câbles textiles 560 sont entourés d'une gaine constituée du deuxième matériau 550. Un procédé de trancannage est utilisé pour fabriquer la tringle à partir du câble gainé. La tringle est obtenue par l'enroulement d'une spire autour d'un support tout en se déplaçant latéralement d'une distance égale au diamètre du câble gainé. A la fin du processus, la tringle résulte de l'assemblage des plusieurs couches de câbles gainés qui se collant les uns aux autres conférant une certaine rigidité à la tringle.

La figure 2-C montre un grossissement du câble gainé. La gaine 550 entoure le câble 560.

La figure 2-D montre une tringle de l'invention où le premier matériau M1 sous forme de filés de textile est dispersé dans une matrice constituée du deuxième matériau M2. La matrice peut être constituée d'un polymère polylactique (PLA), ou d'un nylon (Polyamide 6-6 : PA66) ou encore en vinylester. Le PA66 a un module en compression de 2.7 GPa, et un allongement à la rupture de 70%.

Les figures 3-A, 3-B, 3-C, et 3-D sont des modes réalisations où la tringle possède une âme interne de géométrie variable dans une section méridienne. L'âme interne constituée du matériau M2 est référencée 555, et les câbles textiles 560. La figure 3-F est une vue dans la direction circonférentielle montrant l'enroulement des câbles textiles autour d'une âme interne.

Des configurations de pneumatiques de l'invention ont été testées pour bien mettre en exergue les performances apportées par l'invention. Les résultats de ces tests sont comparés à ceux obtenus pour des pneumatiques témoins.

Les résultats du pneumatique de l'invention sont comparés à ceux d'un témoin de la même dimension pourvu d'une tringle métallique tressée.

La tringle du témoin T comprend une âme interne en acier doux avec 0.1% de carbone, et une couche de câbles métalliques torsadés autour de ladite âme. Les fils des câbles sont en acier avec 0.7% de carbone. L'âme interne a un diamètre de 215 centièmes de millimètres et chaque câble métallique autour de l'âme interne à un diamètre de 130 centièmes de millimètres. Le diamètre total de la tringle, (âme interne + couches de câbles comprises) est de 4,79 mm. La masse d'une telle tringle est de 169 g. Elle est illustrée à la figure 2-A.

Le premier pneumatique P1 conforme à l'invention reprend les spécifications du témoin T, mais la tringle est composée de câbles textiles gainés. Le câble est obtenu après retordage de deux brins ayant chacun une masse linéique de 167 tex. Chaque brin est issu du surtordage d'un filé à 315 tours par mètre. La torsion pendant la phase de retordage est également de 315 tours par mètre.

La gaine du câble est en polyamide 6-6, et la géométrie de la tringle est de forme hexagonale comme représentée sur la figure 2-B. La section du câble gainé est de 0.55 mm², et la section totale de la tringle est de 24 mm². La tringle est obtenue après un trancannage de 45 tours. La masse de cette tringle est de 35 grammes.

Enfin, le deuxième pneumatique P2 conforme à l'invention, contient une paire de tringles constituées chacune de plusieurs couches de câbles textiles en aramide enroulés autour d'une âme interne constituée d'un polymère PLA. Les câbles sont identiques à ceux utilisés pour P1, et l'âme interne de la tringle en PLA a un diamètre de 5.5 mm.

La section de l'âme interne est de 24 mm², et la section totale de la tringle est de 41 mm². Dans un plan méridien, une section de la tringle est de forme hexagonale, comme représentée sur la figure 3-E. L'âme interne est extrudée par un procédé continu, puis coupée, cintrée et collée sur elle-même pour former un anneau. La masse de la tringle est de 60 grammes

Le tableau qui suit résume les différentes configurations testées :

**[Tableau 1]**

| Tringles | Témoin T (Figure 2-A) | P1 (Figure 2-B) | P2 (Figure 3-E) |
|---|---|---|---|
| Solution | Ame métallique 215 + 8x130 | Câble gainé | Ame interne + câbles Diamètre âme interne : 5.5 mm |
| Force rupture | 16,5 kN, mini 26 kN, max | 22kN | 22kN |
| Développement intérieur | 1466 mm | 1450 mm | 1450 mm |
| Diamètre | 4,79 mm | 5.5mm | 7.2mm |
| Masse tringle | 169 g | 35g | 60g |
| Rigidité en extension (EYoung x S) | 2990 kN | 700 kN | 700kN |
| Rigidité de flexion circonférentielle (N.mm²) | 5.10⁵ | 10⁵ | 2.10⁵ |
| Surface section tringle | 18.1 mm² | 24 mm² | 41 mm² |

Le pneumatique témoin, et ceux de l'invention ont été testés et comparés pour des performances impactées par l'influence des tringles.

Comme vu plus haut, les tringles contribuent à la performance de comportement du véhicule. L'influence des tringles sur le comportement peut s'évaluer par l'analyse des rigidités de dérive transversales.

Les mesures de rigidité de dérive transversales ont été faites sur des machines de mesures dédiées comme par exemple celles commercialisées par la société MTS.

**La** tringle contribue également à la qualité du montage du bourrelet sur une jante. Le test de montabilité sur jante consiste à donner un résultat sur la montabilité globale à partir de la décomposition d'un montage en opérations élémentaires qui comprennent notamment : le passage des crochets de j ante, la prise de pression, le franchissement des bosses (« humps » en anglais) de la j ante, la mise en place du bourrelet par compression, l'étanchéité sous le siège de jante, le détalonnage et le démontage. Pour réaliser ce test, des moyens sont nécessaires comme par exemple une machine de montage semi-automatique, ou encore des moyens

**Un** résultat supérieur (respectivement inférieur) à 100% signifie une amélioration (respectivement une dégradation) de la performance considérée.

Les résultats obtenus sont synthétisés dans le tableau n° 2 suivant :

**[Tableau 2]**

| | Pression éclatement | Masse pneu | Masse tringle | Pression de décoincement | Montabilité sur jante |
|---|---|---|---|---|---|
| T1 | 100 | 100 | 100 | 100 | 100 |
| P1 | 90 | 105 | 500 | 100 | 99 |
| P2 | 90 | 103 | 300 | 100 | 98 |

Les pneumatiques de l'invention ont une pression d'éclatement comparable à celle du témoin. La souplesse des tringles de l'invention altère peu leur résistance à l'éclatement. La masse des tringles de l'invention est significativement moindre que celle du témoin T.

**En** outre, on retrouve les performances d'une tringle métallique, ce qui n'était pas le cas des tringles textiles de l'état de l'art.

Les inventeurs ont conçu un pneumatique doté d'une paire de tringles de masse allégée tout en assumant la pluralité des fonctions attendues des tringles. Les inventeurs ont également proposé des tringles dont le coût de revient industriel reste maîtrisé par rapport à l'état de l'art.

## Revendications

1. Pneumatique (1) pour véhicule automobile comprenant dans un plan méridien :
deux bourrelets (50) destinés à être montés sur une jante, deux couches de flancs (30) reliés aux bourrelets (50), un sommet (20) comportant une bande de roulement (10), le sommet (20) ayant un premier côté relié à l'extrémité radialement extérieure de l'une des deux couches de flancs (30) et ayant un deuxième côté relié à l'extrémité radialement extérieure de l'autre des deux couches de flancs (30) ;
au moins une armature de carcasse (90) s'étendant depuis les deux bourrelets (50) jusqu'au sommet (20), l'armature de carcasse (90) comportant une pluralité d'éléments de renforcement de carcasse et étant ancrée dans les deux bourrelets (50) par un retournement autour d'une tringle (51), de manière à former dans chaque bourrelet une partie principale (52) et un retournement (53);
dans chaque bourrelet, la tringle (51) ayant la forme d'un anneau circonférentiel fermé, frettant le bourrelet du pneumatique (1) sur la jante (100) et comprenant une première partie constituée d'un premier matériau M1 se présentant sous la forme de câbles textiles (560), ladite première partie coopérant avec une deuxième partie de la tringle constituée d'un deuxième matériau M2 de renfort,
la tringle (51) présentant une rigidité de flexion circonférentielle comme étant le produit du module de Young par le moment quadratique d'une section méridienne de la tringle (51) dans la direction circonférentielle, exprimée en N.m² et mesurée selon la norme ISO 178,
**caractérisé en ce que,**
la raideur en extension de la tringle (51) est comprise entre 4.5x10⁵ N/m et 1.8 x10⁶ N/m ; la rigidité de flexion circonférentielle de la tringle (51), est supérieure ou égale à Kr * (1000*D / (16*25.4))³, où D est le diamètre de la roue de montage du pneumatique mesuré au siège (110) de la jante (100) en mètre, et où Kr est égal à 2.10⁻² N.m² ;
l'allongement élastique de la tringle (51) est supérieur ou égal à 2%.

2. Pneumatique (1) selon la revendication précédente, **dans lequel** le module élastique d'extension du premier matériau M1 est compris entre 10 GPa et 120 GPa.

3. Pneumatique (1) selon l'une quelconque des revendications précédentes, **dans lequel** le module élastique en compression du deuxième matériau M2 est compris entre 1 et 10 GPa.

4. Pneumatique (1) selon l'une quelconque des revendications 1 à 3, dans lequel la deuxième partie de la tringle constituée du matériau M2 étant enroulée autour du premier matériau M1 de la première partie de la tringle, de manière à constituer un gainage du premier matériau M1, la tringle est obtenue par un empilement de couches du câble ainsi gainé.

5. Pneumatique (1) selon l'une quelconque des revendications 1 à 3, **dans lequel** la deuxième partie de la tringle constituée du matériau M2 est une âme interne, et la première partie de la tringle constituée du matériau M1, sous la forme de câbles textiles, est enroulée autour de ladite âme interne.

6. Pneumatique (1) selon la revendication 5, **dans lequel** la géométrie de l'âme interne dans une section méridienne de la tringle est cruciforme avec une croix comportant 3 à 6 branches.

7. Pneumatique (1) selon la revendication 5, **dans lequel** la géométrie de l'âme interne dans une section méridienne de la tringle est en forme d'un "L", ou en forme d'un "U" ou en forme d'un "H", ou en forme d'un cercle, ou en forme d'un polygone d'au moins 3 côtés.

8. Pneumatique (1) selon l'une quelconque des revendications 5 à 7, **dans lequel** le deuxième matériau M2 constituant l'âme interne de la tringle est du type thermo durci, de préférence réticulée et plus particulièrement du type vinylester.

9. Pneumatique (1) selon l'une quelconque des revendications précédentes, **dans lequel** le câble textile est obtenu par un retordage de torsion T2 de N brins d'un matériau textile dans une direction donnée D1, avec N≥1, chaque brin résultant d'un surtordage d'une torsion T1 d'un filé dudit matériau textile, dans une direction opposée D2.

10. Pneumatique (1) selon la revendication précédente, **dans lequel** les filés sont constitués d'un assemblage hybride de filaments de matériaux textiles.

11. Pneumatique (1) selon la revendication 9 ou 10, **dans lequel** le nombre N de brins pour le retordage est compris entre 2 et 6, et préférentiellement N = 2.

12. Pneumatique (1) selon l'une quelconque des revendications 9 à 11, **dans lequel** la torsion de surtordage T1, et la torsion de retordage T2 sont identiques, et inférieures à 500 tours par mètre, préférentiellement T1, et T2 sont identiques et inférieures à 440 tours par mètre, et encore plus préférentiellement T1 et T2 sont identiques et inférieures ou égales à 315 tours par mètre.

13. Pneumatique (1) selon l'une quelconque des revendications précédentes, dans lequel le bourrelet du pneumatique comprenant au moins une couche de flanc et une couche de protection, lesdites couches de flanc et de protection du bourrelet sont constituées du même matériau élastomérique.

## Patentansprüche

1. Reifen (1) für ein Kraftfahrzeug, welcher in einer Meridianebene umfasst:
zwei Wülste (50), die dazu bestimmt sind, auf einer Felge montiert zu werden, zwei Seitenwandlagen (30), die mit den Wülsten (50) verbunden sind, einen Scheitel (20), der einen Laufstreifen (10) aufweist, wobei der Scheitel (20) eine erste Seite aufweist, die mit dem radial äußeren Ende einer der beiden Seitenwandlagen (30) verbunden ist, und eine zweite Seite aufweist, die mit dem radial äußeren Ende der anderen der beiden Seitenwandlagen (30) verbunden ist;
mindestens eine Karkassenbewehrung (90), die sich von den beiden Wülsten (50) aus bis zu dem Scheitel (20) erstreckt, wobei die Karkassenbewehrung (90) mehrere Karkassenverstärkungselemente aufweist und in den beiden Wülsten (50) durch einen Umschlag um einen Wulstkern (51) herum verankert ist, so dass in jedem Wulst ein Hauptteil (52) und ein Umschlag (53) gebildet werden;
wobei in jedem Wulst der Wulstkern (51) die Form eines geschlossenen Umfangsringes aufweist, der den Wulst des Reifens (1) auf die Felge (100) aufpresst und einen ersten Teil umfasst, der aus einem ersten Material M1 besteht, das die Form von Textilkorden (560) aufweist,
wobei der erste Teil mit einem zweiten Teil des Wulstkerns zusammenwirkt, der aus einem zweiten Verstärkungsmaterial M2 besteht,
wobei der Wulstkern (51) eine Umfangsbiegesteifigkeit aufweist, welche das Produkt des Elastizitätsmoduls mit dem quadratischen Moment eines Meridianschnittes des Wulstkerns (51) in der Umfangsrichtung ist, ausgedrückt in N.m² und gemessen nach der Norm ISO 178,
**dadurch gekennzeichnet, dass**
die Dehnsteifigkeit des Wulstkerns (51) zwischen 4,5x10⁵ N/m und 1,8x10⁶ N/m liegt; die Umfangsbiegesteifigkeit des Wulstkerns (51) größer oder gleich Kr * (1000*D / (16*25,4))³ ist, wobei D der Durchmesser des Montagerades des Reifens ist, gemessen am Sitz (110) der Felge (100) in Metern, und wobei Kr gleich 2.10⁻² N.m² ist;
die elastische Dehnung des Wulstkerns (51) größer oder gleich 2 % ist.

2. Reifen (1) nach dem vorhergehenden Anspruch, wobei der Dehnelastizitätsmodul des ersten Materials M1 zwischen 10 GPa und 120 GPa liegt.

3. Reifen (1) nach einem der vorhergehenden Ansprüche, wobei der Druckelastizitätsmodul des zweiten Materials M2 zwischen 1 und 10 GPa liegt.

4. Reifen (1) nach einem der Ansprüche 1 bis 3, wobei, wenn der aus dem Material M2 bestehende zweite Teil des Wulstkerns um das erste Material M1 des ersten Teils des Wulstkerns gewickelt ist, um so eine Umhüllung des ersten Materials M1 zu bilden, der Wulstkern durch eine Stapelung von Lagen des so umhüllten Kords erhalten wird.

5. Reifen (1) nach einem der Ansprüche 1 bis 3, wobei der aus dem Material M2 bestehende zweite Teil des Wulstkerns eine Innenseele ist und der aus dem Material M1 bestehende erste Teil des Wulstkerns in der Form von Textilkorden um diese Innenseele gewickelt ist.

6. Reifen (1) nach Anspruch 5, wobei die Geometrie der Innenseele in einem Meridianschnitt des Wulstkerns kreuzförmig ist, mit einem Kreuz, das 3 bis 6 Zweige aufweist.

7. Reifen (1) nach Anspruch 5, wobei die Geometrie der Innenseele in einem Meridianschnitt des Wulstkerns die Form eines "L" oder die Form eines "U" oder die Form eines "H" oder die Form eines Kreises oder die Form eines Vielecks mit mindestens 3 Seiten hat.

8. Reifen (1) nach einem der Ansprüche 5 bis 7, wobei das zweite Material M2, das die Innenseele des Wulstkerns bildet, vom in Wärme ausgehärteten Typ, vorzugsweise vernetzt und insbesondere vom Typ Vinylester ist.

9. Reifen (1) nach einem der vorhergehenden Ansprüche, wobei der Textilkord durch eine Torsionszwirnung T2 von N Strängen eines textilen Materials in einer gegebenen Richtung D1 erhalten wird, mit N≥1, wobei jeder Strang aus einer Überzwirnung einer Torsion T1 eines Garns des textilen Materials in einer entgegengesetzten Richtung D2 resultiert.

10. Reifen (1) nach dem vorhergehenden Anspruch, wobei die Garne aus einer Hybridanordnung von Filamenten textiler Materialien bestehen.

11. Reifen (1) nach Anspruch 9 oder 10, wobei die Anzahl N von Strängen für die Zwirnung zwischen 2 und 6 liegt und vorzugsweise N = 2 ist.

12. Reifen (1) nach einem der Ansprüche 9 bis 11, wobei die Überzwirnungstorsion T1 und die Zwirnungstorsion T2 identisch und kleiner als 500 Umdrehungen pro Meter, vorzugsweise T1 und T2 identisch und kleiner als 440 Umdrehungen pro Meter und noch stärker bevorzugt T1 und T2 identisch und kleiner oder gleich 315 Umdrehungen pro Meter sind.

13. Reifen (1) nach einem der vorhergehenden Ansprüche, wobei, wenn der Wulst des Reifens mindestens eine Seitenwandlage und eine Schutzlage umfasst, diese Seitenwand- und diese Schutzlage des Wulstes aus demselben elastomeren Material bestehen.

## Claims

1. Tyre (1) for a motor vehicle, comprising the following in a meridian plane:
two beads (50) intended to be mounted on a rim, two sidewall layers (30) connected to the beads (50), and a crown (20) having a tread (10), the crown (20) having a first side connected to the radially outer end of one of the two sidewall layers (30) and a second side connected to the radially outer end of the other one of the two sidewall layers (30);
at least one carcass reinforcement (90) extending from the two beads (50) as far as the crown (20), the carcass reinforcement (90) having a plurality of carcass reinforcing elements and being anchored in the two beads (50) by way of a turn-up around a bead wire (51), so as to form a main part (52) and a turn-up (53) in each bead;
in each bead, the bead wire (51) having the form of a closed circumferential ring, bracing the bead of the tyre (1) against the rim (100) and comprising a first part made of a first material M1 taking the form of textile cords (560), said first part interacting with a second part of the bead wire made of a reinforcing second material M2,
the bead wire (51) having a circumferential bending stiffness defined as the product of the Young's modulus and the area moment of inertia of a meridian section through the bead wire (51) in the circumferential direction, expressed in N.m² and measured according to the ISO 178 standard,
**characterized in that**
the tensile stiffness of the bead wire (51) is comprised between 4.5x10⁵ N/m and 1.8x10⁶ N/m;
the circumferential bending stiffness of the bead wire (51) is greater than or equal to Kr * (1000*D / (16*25.4))³, where D is the diameter of the wheel on which the tyre is mounted, measured at the seat (110) of the rim (100) in metres, and where Kr is equal to 2.10⁻² N.m²;
the elastic elongation of the bead wire (51) is greater than or equal to 2%.

2. Tyre (1) according to preceding claim 1, **wherein** the tensile elastic modulus of the first material M1 is comprised between 10 GPa and 120 GPa.

3. Tyre (1) according to any one of the preceding claims, **wherein** the compression elastic modulus of the second material M2 is comprised between 1 GPa and 10 GPa.

4. Tyre (1) according to any one of Claims 1 to 3, **wherein** the second part of the bead wire made of the material M2 being wound around the first material M1 of the first part of the bead wire, so as to form a sheathing of the first material M1, **wherein** the bead wire is obtained by a stack of layers of the cord thus sheathed.

5. Tyre (1) according to any one of Claims 1 to 3, **wherein** the second part of the bead wire made of the material M2 is an internal core, and the first part of the bead wire made of the material M1, in the form of textile cords, is wound around said internal core.

6. Tyre (1) according to Claim 5, **wherein** the geometry of the internal core in a meridian section of the bead wire is in the shape of a cross having 3 to 6 arms.

7. Tyre (1) according to Claim 5, **wherein** the geometry of the internal core in a meridian section of the bead wire has an "L" shape, or a "U" shape or an "H" shape, or is circular, or polygonal with at least 3 sides.

8. Tyre (1) according to any one of Claims 5 to 7, **wherein** the second material M2 making up the internal core of the bead wire is of the thermoset type, preferably crosslinked, and more particularly of the vinyl ester type.

9. Tyre (1) according to any one of the preceding claims, **wherein** the textile cord is obtained by twisting a twist T2 of N strands of a textile material in a given direction D1, with N≥1, each strand resulting from overtwisting a twist T1 of a spun yarn of said textile material in an opposite direction D2.

10. Tyre (1) according to the preceding claim, **wherein** the spun yarns are made of a hybrid assembly of filaments of textile materials.

11. Tyre (1) according to Claim 9 or 10, **wherein** the number N of strands for the twisting is comprised between 2 and 6, and preferentially N = 2.

12. Tyre (1) according to any one of Claim 9 to 11, **wherein** the overtwisting twist T1 and the twisting twist T2 are identical, and less than 500 turns per metre, preferentially T1 and T2 are identical and less than 440 turns per metre, and more preferentially still T1 and T2 are identical and less than or equal to 315 turns per metre.

13. Tyre (1) according to any one of the preceding claims, **wherein** the bead of the tyre comprising at least one sidewall layer and one protective layer, said sidewall and protective layers of the bead are made of the same elastomer material.
